# EUROPÄISCHE PATENTSCHRIFT

(11) **EP 3 650 114 B1**
(45) Veröffentlichungstag und Bekanntmachung des Hinweises auf die Patenterteilung: **15.03.2023**
(21) Anmeldenummer: 19000468.9
(22) Anmeldetag: 14.10.2019
(51) Int. Cl.: B01J 3/04, B32B 17/10

(54) **VERFAHREN ZUM BEAUFSCHLAGEN VON TEILEN IN EINEM AUTOKLAVEN MIT ERHÖHTER TEMPERATUR UND/ODER ERHÖHTEM DRUCK UND AUTOKLAV**
METHOD FOR APPLICATION TO PARTS IN AN AUTOCLAVE WITH INCREASED TEMPERATURE AND / OR ELEVATED PRESSURE AND AUTOCLAVE
PROCÉDÉ D'APPLICATION DE TEMPÉRATURE ET/OU DE PRESSION ÉLEVÉE À DES PI?CES DANS UN AUTOCLAVE ET AUTOCLAVE

(30) Priorität: 06.11.2018 DE 102018008719
(43) Veröffentlichungstag der Anmeldung: 13.05.2020
(73) Patentinhaber: MASCHINENBAU SCHOLZ GMBH & CO. KG, 48653 Coesfeld (DE)
(72) Erfinder: Funke, Frank, 48653 Coesfeld (DE)
(74) Vertreter: Hauck Patentanwaltspartnerschaft mbB

(56) Entgegenhaltungen:
- DE-A1- 19 811 199
- US-A- 4 317 807

## Beschreibung

Die vorliegende Erfindung betrifft ein Verfahren zum Beaufschlagen von Teilen in einem Autoklaven mit erhöhter Temperatur und/oder erhöhtem Druck, wobei sich in die im,Autoklaven befindliche Atmosphäre entweichende flüchtige Bestandteile bilden.

Es gibt eine Vielzahl von Verfahren, bei denen bestimmte Teile in Autoklaven behandelt werden, um dort mit einer erhöhten Temperatur und/oder einem Druck beaufschlagt zu werden. Bei derartigen Verfahren kommt es häufig vor, dass sich von diesen Teilen oder zusätzlich eingebrachten Materialien flüchtige Bestandteile bilden, die in die im Autoklaven befindliche Atmosphäre entweichen. Diese flüchtigen Bestandteile können sich im Autoklaven ansammeln und hierdurch entsprechende Probleme bereiten, beispielsweise im schlimmsten Fall zu einem Brand des Autoklaven führen.

Beispielsweise kann es sich bei derartigen flüchtigen Bestandteilen um Weichmacher handeln, die aus zu behandelnden Elastomeren austreten. Solche Weichmacher können auch bei der Produktion von Sicherheitsglas entweichen. Hierbei wird zwischen zwei Glasscheiben eine Kunststofffolie, beispielsweise eine Polyvinylbutyral-Folie, gelegt, und diese Teile werden anschließend in einem Autoklaven unter Druck und Temperatur miteinander verbunden. Bei dieser Prozedur können die erwähnten Weichmacher austreten und sich in der im Autoklaven befindlichen Atmosphäre ansammeln, was zu den vorstehend geschilderten Problemen führen kann.

Aus der US 4,317,807 ist ein System zur Durchführung von exothermen Reaktionen in einem Gefäß bekannt, bei dem Kühlluft in das Gefäß eingeführt wird. Die Kühlluft nimmt die während der exothermen Reaktion entstehenden Gase auf. Das entsprechende Gasgemisch wird aus dem Gefäß herausgeführt und umgewälzt, wobei die in der Kühlluft mitgeführten Gase auskondensiert werden. Das entsprechende System dient insbesondere zur Herstellung von Phosphorsäure und ist als offenes System ausgebildet, bei dem laufend Kühlluft nachgeführt wird.

Die DE 198 11 199 A1 befasst sich mit einem Verfahren zum Recyceln von Polyvinylbutyral aus Sicherheitsglasscheiben. Hier wird nach Zerkleinerung und Abtrennung des größten Teiles des Glases das Polyvinylbutyral in einem Autoklaven bei erhöhter Temperatur und erhöhtem Druck in einem Lösemittel gelöst und von den anhaftenden Glasteilen getrennt. Das Polyvinylbutyral wird dabei durch Lösemittelentzug zurückgewonnen, wobei der Autoklav mit Unterstützung eines eingeführten Gases geleert wird. Das abgeführte Gasgemisch wird dabei über eine Kühlfalle geführt. Eine Rückführung des Gases ist nicht vorgesehen.

Der vorliegenden Erfindung liegt die Aufgabe zugrunde, ein Verfahren der eingangs geschilderten Art zur Verfügung zu stellen, das eine weitgehend problemfreie Behandlung der Teile im Autoklaven ermöglicht.

Diese Aufgabe wird erfindungsgemäß durch ein Verfahren gemäß Patentanspruch 1 gelöst.

Bei dem erfindungsgemäßen Verfahren werden die sich bildenden flüchtigen Bestandteile über ein Umwälzsystem aus dem Autoklaven herausgeführt, außerhalb des Autoklaven zum Auskondensieren abgekühlt und aus dem Umwälzsystem herausgeführt, wobei die von den auskondensierten flüchtigen Bestandteilen befreite Atmosphäre wieder in den Autoklaven eingeführt wird. Die sich während der Behandlung der Teile innerhalb des Autoklaven bildenden flüchtigen Bestandteile gasförmiger Natur vermischen sich mit der im Autoklaven herrschenden Atmosphäre und werden über eine Umwälzeinrichtung aus dem Autoklaven herausgeführt. Sie gelangen dort in eine Kühlstrecke, in der sie auskondensieren und in einen flüssigen, insbesondere zähflüssigen, und/oder festen Zustand übergehen. Auf diese Weise werden die unerwünschten flüchtigen Bestandteile aus der Atmosphäre abgeschieden, und die gereinigte Atmosphäre wird wieder in den Autoklaven eingeführt. Erfindungsgemäß erfolgt somit eine Abscheidung der flüchtigen Bestandteile durch Auskondensieren in einem geschlossenen System.

Die abgeschiedenen auskondensierten Bestandteile werden dann kontinuierlich oder in zeitlichen Abständen aus dem Umwälzsystem entfernt. Das erfindungsgemäße Verfahren wird zum Auskondensieren von in die Atmosphäre entweichenden Weichmachern eingesetzt und speziell bei der Herstellung von Sicherheitsglas verwendet.

Die aus dem Autoklaven abgeleitete Atmosphäre wird zum Kühlen über eine geneigte Kühlstrecke geleitet. Hierdurch wird erreicht, dass die auskondensierten Substanzen, die sich insbesondere in einem flüssigen bzw. zähflüssigen Zustand befinden, durch Schwerkraftwirkung von selbst aus dem System abgeleitet werden.

Dabei wird die aus dem Autoklaven abgeleitete Atmosphäre zum Kühlen durch eine von einem Doppelrohr gebildete Kühlstrecke geleitet. Hierbei wird die gasförmige Atmosphäre durch das Innenrohr geleitet, während sich innerhalb des Außenrohres ein Kühlmedium, beispielsweise Wasser, befindet. Die flüchtigen Bestandteile kondensieren dann an der Innenwand des Innenrohres aus und werden von dort, insbesondere durch Schwerkraftwirkung, einer Entnahmeeinrichtung zugeführt und aus dem System entfernt.

Zum Umwälzen der Atmosphäre findet beispielsweise ein innerhalb des Autoklaven angeordnetes Gebläse Verwendung. Falls erforderlich, können im System weitere Gebläse eingesetzt werden.

Die vorliegende Erfindung betrifft ferner einen Autoklaven zur Durchführung des vorstehend beschriebenen Verfahrens. Der Autoklav ist durch die Merkmale von Patentanspruch 4 gekennzeichnet.

Die Kühlstrecke ist geneigt und weist am unteren Ende eine Kondensatentfernungseinrichtung auf. Wie bereits erwähnt, gelangt hierbei das im Bereich der Kühlstrecke abgeschiedene Kondensat durch Schwerkraftwirkung zum unteren Ende der Kühlstrecke und wird über die Kondensatentfernungseinrichtung entfernt.

Speziell umfasst die Kühlstrecke ein Doppelrohr, in dessen Außenbereich ein Kühlmedium, insbesondere Wasser, angeordnet ist. Hierbei kondensieren die flüchtigen Bestandteile an der Innenwand des Innenrohres aus, und die von den auskondensierten flüchtigen Bestandteilen befreite Atmosphäre wird über das Rohrsystem wieder in den Autoklaven hineingeführt. Ein oder mehrere Gebläse können die Autoklavenatmosphäre durch das vorgesehene Rohrsystem umwälzen.

Die Erfindung wird nachfolgend anhand eines Ausführungsbeispiels in Verbindung mit der Zeichnung im Einzelnen erläutert. Es zeigen:
- Figur 1: eine räumliche Darstellung eines mit einem Kondensatabscheider versehenen Autoklaven;
- Figur 2: eine vergrößerte Seitenansicht des Autoklaven der Figur 1; und
- Figur 3: eine vergrößerte Stirnansicht des Autoklaven der Figur 1.

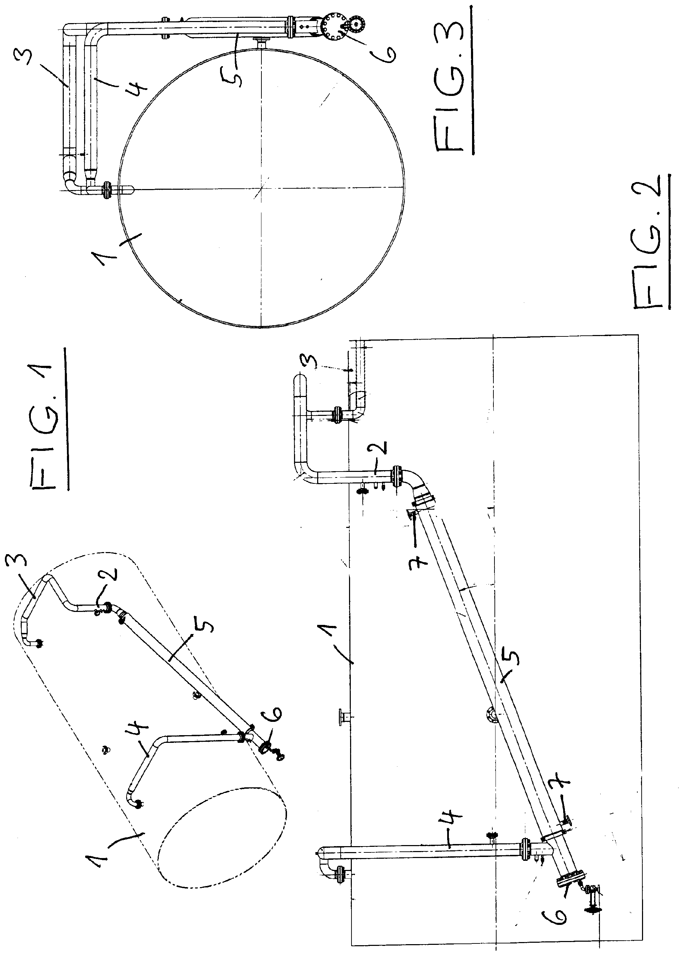

Figur 1 zeigt eine schematische Ansicht eines Autoklaven 1, der als zylindrischer Körper ausgebildet ist. Einzelheiten des Autoklaven, die für die hier beschriebene Erfindung keine Rolle spielen, sind nicht dargestellt. Der gezeigte Autoklav dient beispielsweise zur Produktion von Sicherheitsglas. Dabei wird eine Kunststofffolie zwischen zwei Glasscheiben gelegt, und dieses Gebilde wird in den Autoklaven eingebracht und dort unter Druck und Temperatur verbunden.

Bei dieser Vorgehensweise treten aus der Kunststofffolie Weichmacher aus, die sich als flüchtige Substanzen mit der im Autoklaven befindlichen Atmosphäre mischen können. Eine derartige Atmosphäre ist feuergefährlich und kann im schlimmsten Fall zu einem Autoklavenbrand führen.

Erfindungsgemäß soll die Ausbildung einer derartigen Atmosphäre verhindert werden, indem die schädlichen flüchtigen Substanzen (hier Weichmacher etc.) aus der Autoklavenatmosphäre entfernt werden.

Hierzu besitzt der Autoklav 1 einen Kondensatabscheider 2, der eine im Autoklaven angeordnete Umwälzeinrichtung in Form eines Gebläses sowie ein außerhalb des Autoklaven angeordnetes Rohrsystem umfasst. Dieses Rohrsystem weist ein aus dem Autoklaven herausführendes Rohr 3 auf, das in ein Kühlrohr 5 übergeht. Das Kühlrohr 5 ist als Doppelrohr ausgebildet und wird in seinem Inneren von der aus dem Autoklaven abgeführten Atmosphäre durchströmt. Zwischen Innenrohr und Außenrohr befindet sich ein Kühlmedium, hier Wasser, mit dem die Gasatmosphäre innerhalb des Innenrohres gekühlt wird. Vom Kühlrohr 5 führt ein Rohr 4 wieder in den Autoklaven hinein. Das Kühlrohr 5 ist geneigt angeordnet, wobei sich am unteren Ende des Kühlrohres eine Entleerungseinrichtung 6 befindet.

Details des vorstehend beschriebenen Aufbaus sind in den Figuren 2 und 3 dargestellt.

Der vorstehend beschriebene Kondensatabscheider 2 funktioniert in der folgenden Weise:
Der Kondensatabscheider 2 ist als geschlossenes System ausgebildet. Die im Inneren des Autoklaven 1 angeordnete Umwälzeinrichtung (nicht gezeigt) wälzt die Autoklaven-Atmosphäre, die die unerwünschten flüchtigen Bestandteile enthält, im Autoklaven um, wobei die Atmosphäre über das Rohr 3 in das Kühlrohr 5 gelangt. Hier findet eine Kondensation der flüchtigen Bestandteile an der Innenwand des Innenrohres statt, während die von den auskondensierten Bestandteilen befreite Gasatmosphäre das Kühlrohr 5 passiert und über das Rohr 4 in den Autoklaven zurückgeführt wird. Während der Behandlung der Teile im Autoklaven findet ein kontinuierlicher Umwälzvorgang in der vorstehend beschriebenen Weise statt.

Die auskondensierten Substanzen, bei denen es sich um eine überwiegend zähflüssige Masse handelt, laufen durch die Neigung des Kühlrohres 5 an der Innenwand des Rohres nach unten und gelangen zur Entleerungseinrichtung 6. Sie können dann in Abständen aus dem System abgeführt werden.

Zum Austausch des Kühlmediums im Kühlrohr 5 sind entsprechende Ventile 7 vorgesehen.

Zum Austausch des Kühlmediums im Kühlrohr 5 sind entsprechende Ventile 7 vorgesehen.

## Patentansprüche

1. Verfahren zum Beaufschlagen von Teilen in einem Autoklaven (1) mit erhöhter Temperatur und/oder erhöhtem Druck, wobei sich in die im Autoklaven (1) befindliche Atmosphäre entweichende flüchtige Bestandteile in Form von Weichmachern bilden, mit den folgenden Schritten:
Betreiben eines geschlossenen Atmosphärenumwälzsystems zum Leiten der die flüchtigen Bestandteile enthaltenden Atmosphäre aus dem Autoklaven (1) heraus;
Kühlen der herausgeführten Atmosphäre zum Auskondensieren der flüchtigen Bestandteile durch Leiten der Atmosphäre durch eine von einem Doppelrohr gebildete geneigte Kühlstrecke;
erneutes Einführen der von den flüchtigen Bestandteilen gereinigten Atmosphäre in den Autoklaven (1); und
Abführen der auskondensierten flüchtigen Bestandteile aus dem Umwälzsystem.

2. Verfahren nach Anspruch 1, **dadurch gekennzeichnet, dass** es zur Herstellung von Sicherheitsglas verwendet wird.

3. Verfahren nach einem der vorangehenden Ansprüche, **dadurch gekennzeichnet, dass** die Atmosphäre innerhalb des Autoklaven (1) umgewälzt wird.

4. Autoklav zur Durchführung des Verfahrens nach einem der Ansprüche 1 bis 3, der einen als Atmosphärenumwälzsystem ausgebildeten Kondensatabscheider (2) mit einer im Autoklaven (1) angeordneten Umwälzeinrichtung und einem aus dem Autoklaven (1) heraus- und wieder hereinführenden Rohrsystem mit einer außerhalb des Autoklaven (1) angeordneten Kühleinrichtung zur Kondensatabscheidung aufweist, wobei der Kondensatabscheider (2) als geschlossenes System ausgebildet ist und die Kühleinrichtung eine geneigte Kühlstrecke mit Doppelrohr aufweist, an deren unterem Ende eine Kondensatentfernungseinrichtung (6)angeordnet ist.

5. Autoklav nach Anspruch 4, **dadurch gekennzeichnet, dass** im Außenbereich des Doppelrohres ein Kühlmedium angeordnet ist.

6. Autoklav nach einem der Ansprüche 4 oder 5, **dadurch gekennzeichnet, dass** er zur Herstellung von Sicherheitsglas dient.

## Claims

1. A method for applying increased temperature and/or elevated pressure to parts in an autoclave, wherein volatile components escaping into the atmosphere in the autoclave (1) are formed in the form of plasticizers, having the following steps:
Operating a closed atmospheric circulating system for guiding the atmosphere containing the volatile components out of the autoclave (1);
Cooling the atmosphere that has been fed out for condensing the volatile components by guiding the atmosphere through an inclined cooling section formed by a double pipe;
Re-inserting the atmosphere cleaned of the volatile components into the autoclave (1); and
Discharging the condensed volatile components out of the circulating system.

2. The method according to claim 1, **characterized in that** it is used to manufacture safety glass.

3. The method according to one of the previous claims, **characterized in that** the atmosphere within the autoclave (1) is circulated.

4. An autoclave for carrying out the method according to one of claims 1 to 3, comprising a condensate separator (2) designed as an atmospheric circulating system, said condensate separator having a circulating apparatus arranged in the autoclave (1) and a pipe system leading out of the autoclave (1) and back in to same, said pipe system having a cooling apparatus arranged outside of the autoclave (1) for separating the condensate, wherein the condensate separator (2) is designed as a closed system and the cooling apparatus comprises an inclined cooling section with a double pipe, on the lower end of which a condensate removal apparatus (6) is arranged.

5. The autoclave according to claim 4, **characterized in that** a cooling medium is arranged in the outer region of the double pipe.

6. The autoclave according to one of claims 4 or 5, **characterized in that** it serves to manufacture safety glass.

## Revendications

1. Procédé destiné à soumettre des pièces à une température élevée et/ou une pression élevée dans un autoclave (1), dans lequel se forment des composants volatiles sous forme d'agents assouplissants s'échappant dans l'atmosphère présente dans l'autoclave (1), comprenant les étapes suivantes :
actionnement d'un système de brassage de l'atmosphère fermé destiné à guider l'atmosphère contenant les composants volatiles hors de l'autoclave (1) ;
refroidissement de l'atmosphère extraite, pour la condensation des composants volatiles par guidage de l'atmosphère à travers un trajet de refroidissement incliné formé par un double conduit ;
réintroduction de l'atmosphère débarrassée des composants volatiles dans l'autoclave (1) ; et
évacuation des composants volatiles condensés hors du système de brassage.

2. Procédé selon la revendication 1, **caractérisé en ce que** celui-ci est utilisé pour la fabrication de verre de sécurité.

3. Procédé selon l'une des revendications précédentes, **caractérisé en ce que** l'atmosphère à l'intérieur de l'autoclave (1) est brassée.

4. Autoclave destiné à mettre en oeuvre le procédé selon l'une des revendications 1 à 3, présentant un séparateur de condensat (2) conçu comme un système de brassage de l'atmosphère, avec un dispositif de brassage disposé dans l'autoclave (1) et un système de conduits sortant de l'autoclave (1) et revenant vers celle-ci, avec un dispositif de refroidissement disposé à l'extérieur de l'autoclave (1) pour la séparation du condensat, dans lequel le séparateur de condensat (2) est conçu comme un système fermé et le dispositif de refroidissement présente un trajet de refroidissement incliné doté d'un double conduit, à l'extrémité inférieure duquel est disposé un dispositif d'élimination de condensat.

5. Autoclave selon la revendication 4, **caractérisé en ce qu'**un fluide de refroidissement est disposé dans la région extérieure du double conduit.

6. Autoclave selon l'une des revendications 4 ou 5, **caractérisé en ce que** celui-ci est destiné à la fabrication de verre de sécurité.
